# EUROPEAN PATENT APPLICATION

(11) **EP 1 658 925 A1**
(43) Date of publication of application: **24.05.2006**
(21) Application number: 05023904.5
(22) Date of filing: 03.11.2005
(51) Int. Cl.: B23P 15/00, C23C 4/02, C23C 4/04, F01D 11/12, F04D 29/16, F01D 11/08

(54) **Process for producing a compressor housing**

(30) Priority: 20.11.2004 DE 102004056179
(71) Applicant: Borgwarner, Inc., Auburn Hills, MI 48326-2872 (US)
(72) Inventor: Jaisle, Jens W., Dr., 56190 Billiers (FR); Pellkofer, Wolfgang, 91567 Herrieden, Ansbach (DE); Sagel, Alexander, Dr., 73207 Plochingen (DE); Zoller, Ansgar, 89233 Neu Ulm (DE); Lehmann, Hans-Georg, 73732 Esslingen (DE)
(74) Representative: Balsters, Robert

(57) **Abstract**

A compressor housing (1) of a turbocharger is provided with an abrasion coating (7) on the inner wall (8) which cooperates with the compressor wheel (4).

The production of the abrasion coating (7) by means of plasma spraying does not require any activation in-depth of the surface and may be applied directly onto the surface of the compressor housing wall (8) which is, for example rough turned.

The coating (7) has a constant porosity and a relative small particle size.

## Description

The present invention relates to a process for producing a compressor housing, for example of an exhaust gas turbocharger, comprising a rotationally symmetrical wall, the inner side of which is provide with an abrasion coating, as well as to a compressor housing having a rotationally symmetrical wall for receiving a compressor wheel which rotates about a central axis within the compressor housing, wherein the edge regions thereof, being remote from the axis in radial direction, move at a relative small distance to the contour of the rotationally symmetrical wall along this contour, the inner wall of the compressor housing having an abrasion coating which is swept by the edge regions of the compressor wheel, thereby adapting the surface of the abrasion coating, particularly during an early phase of operation of the compressor, to the edge contour of the compressor wheel, and wherein the abrasion coating is produced from a powder mixture of aluminium-silicon and polyester.

Turbochargers in the vehicle technique are known already for many years, and, driven by the energy of the exhaust gases of a combustion motor, serve the purpose of precompressing the intake air for the combustion of fuel in order to increase the efficiency of the motor considerably.

Such a turbocharger consists substantially of two parts, i.e. a turbine driven by the exhaust gases and a compressor driven by this turbine.

Within the compressor, a compressor wheel is rotating which compresses the intake air before it is directed to the combustion space.

While working in this way, the compressor wheel rotates about a central axis about which the rotationally symmetric housing is arranged too. To this end, the edge contours of the compressor wheel are adapted to the curvature of the of the compressor housing wall where only a small gap between the edge of the compressor wheel and the wall is still existing.

In this connection, the efficiency of the compressor is dependent to a vast extent upon the remaining gap width so that considerable efforts are necessary to render the gap as small as possible, thereby maintaining the required freedom for the rotation of the compressor wheel, and this over the entire extension of the gap.

This requires a precise adaptation of the wall of the compressor housing to the rotationally symmetrical contour of the compressor wheel.

Since the production tolerances are, with bearable costs, in a range which does not always allow an optimum adaptation of the two components, but also, because the components, being subjected to strong mechanical and thermal loads, may change in the course of time, it was already in the past that one conceived an inner side of a compressor housing wall with an abrasion coating which has a relative soft surface so that the compressor wheel, during rotation, grinds this surface off to a degree that the remaining dimension of the abrasion coating forms exactly the minimum width of the gap strived for.

Japanese Patent Application 01060701 A1 describes a coating method for a compressor having an abrasion coating, wherein the abrasion coating is produced by flame spraying of a powdery mixture of AlSi and a polyester.

This document describes no detail of the method concerning the production of the compressor housing before coating it, so that it has to be assumed that it has been produced in accordance with the methods usual in the automotive industry.

This means that the surface of the compressor housing has to be activated prior to flame spraying in order to obtain sufficient coarseness which guarantees the mechanical anchorage of the sprayed coating.

Such an activation is conventionally achieved by means of corundum blasting, highpressure water jets or even by pneumatic nailing which require a production technical intermediate step, including the inherent costs, between the basic preparation of the compressor housing and the coating of its inner wall.

Furthermore, although the Japanese document does not give any indication about the particle size of the coating, those skilled in the art will recognise that the particle size obtained will be at about 10 or more microns.

Moreover, this document describes the manufacture of an abrasion coating of graduate porosity which is not considered by the inventors of the present invention to be adapted to reach that goal.

It is an object of the invention to provide a process for producing a compressor housing having an abrasion coating as well as a compressor housing manufactured in accordance with this process by means of which such a production technical intermediate step can be avoided.

According to the invention, this object is achieved by the following steps:
- Manufacturing of a compressor housing by means of a manufacturing procedure which includes rough turning,
- coating the inner side of the wall of the compressor housing with an abrasive coating without an intermediate activation step of the surface that is independent upon the production process, and
- optionally a finishing treatment of the coated surface.

In accordance with an embodiment, the production of the abrasion coating can be made by means of atmospheric plasma spraying.

A preferred starting material for producing the abrasion coating by means of plasma spraying is a mixture of aluminium-silicone and a polyester.

A particularly advantageous starting material is a mixture of aluminium-silicone and a polyester sold by Sulzer Metco under the reference NS 601.

In an advantageous manner, the coating parameters are chosen in such a manner that the porosity of the abrasion coating is constant throughout the coating's thickness.

In accordance with one embodiment of the invention, the abrasion coating comprises a fine-grained structure having an average particle size of about 4 microns, as may be produced, for example, by atmospheric plasma spraying.

In accordance with one embodiment of the invention, a part of the inner contour (only the area 6) of the compressor housing, which forms a rotationally symmetrical gap together with the compressor wheel, is provided with an abrasion coating.

In another embodiment, the compressor housing is provided with an abrasion coating not only in the area 6, but also in the intake region 5.

The invention relates, furthermore, to the use of a compressor housing produced according to the invention as a housing of a turbocharger compressor.

### Brief description of the drawings

- Fig. 1: shows an axial cross-section of a compressor housing having an abrasion coating, and
- Fig. 2: is a diagram of the efficiency improvement of a turbocharger compressor having an abrasion coating according to the invention.

### Detailed description of the invention

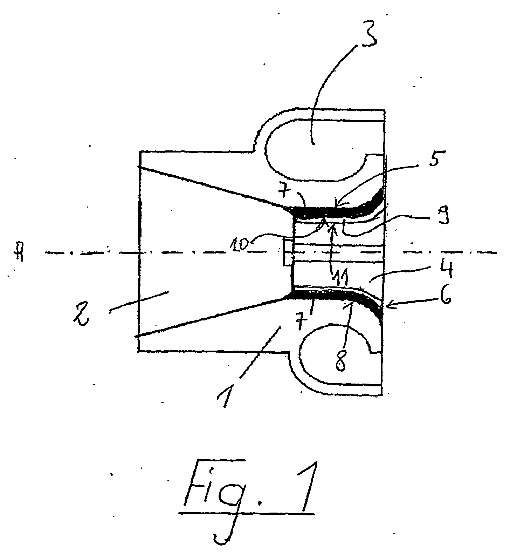

Fig. 1 shows an axial cross-section of a compressor of a turbocharger.

The housing 1 of the compressor comprises an intake region 2 for the air to be compressed which tapers in flow direction up to the compressor wheel 4.

In the region 5 of the smallest cross-section, the compressor wheel 4 is arranged which extends in flow direction from the region 5 of smallest cross-section farther on to a region 6 of a larger cross-section from which compressed air is directed, in a manner not shown, into an annular space 3 from which it is further supplied to a combustion space not shown.

Within the regions 5 and 6 of the compressor housing, which are swept by the rotating compressor wheel 4, an abrasion coating 7 is applied to the inner wall 8 of the housing 1 which has practically exactly the same rotational shape as the rotational shape of the compressor wheel 4, with exception of a minimum gap 9 to enable free rotation of the compressor wheel.

This minimum gap 9 is excessively thick represented in Fig. 1, likewise as the thickness of the abrasion coating 7.

For production technical reasons, the width of the gap has to be chosen large enough to prevent glancing of the compressor wheel on the inner wall of the housing under all conditions, because this would generate high-frequency vibrations of the compressor vanes which would result in an early failure of the compressor wheel. On the other hand, the gap should be as small as possible in order to attain high efficiency of the compressor.

A solution to the dilemma of using the smallest gap width for increasing the efficiency of the compressor, on the one hand, and of using a gap width sufficiently large, on the other hand, to avoid an early failure of the turbocharger, is to provide the inner surface of the compressor wall with a softer coating, which not only tolerates glancing of the compressor wheel fans, but presents itself to the contours of the vanes to produce a gap, that is adapted in an optimum way, by grinding it off.

The thickness and the softness of the coating are chosen in such a manner that glancing can intentionally be accepted on the one hand, but sticking of the compressor wheel is definitely avoided on the other hand.

In contrast to Japanese Patent No. 01060701, wherein a process for producing a graduated coating porosity is described, the inventors of the present invention have considered a constant porosity as more advantageous. This results in a more uniform abrasion of the coating and is, therefore, more favourable for forming a minimum gap. For obtaining a minimum, it is favourable to achieve a relative small particle size in the abrasion coating in order to maintain the particles ejected by the compressor vanes during rotating as small as possible, thus maintaining the craters left as small as possible, which leads, on the one hand, to a reduced mechanical stress and, on the other hand, to a better condition of surface.

The atmospheric plasma spraying process opens the possibility of dropping the pretreatment of the compressor housing (for example corundum blasting) and to pre-pone a simpler procedure, such as rough turning, instead.

This rough turning may either be used directly as a part of the manufacturing process for the corresponding component, but it can also be applied as a simple intermediate step for components having a smooth surface which have already been manufactured in accordance with other processes.

The capacity to adhesion, in the case of plasma sprayed coatings is considerably greater than with flame sprayed coatings. In addition, the technique offers the possibility according to the invention of treating a compressor housing blank after simple rough turning by means of plasma spraying by which the adhesion capacity is still further improved.

### Example

A compressor housing blank was produced in a customary manner by aluminium casting and was subsequently finished by turning, in order to obtain the desired dimension or surface quality in regions which require a precise dimension or a smooth surface. Afterwards, a rough turning process was effected which produces a roughness in the areas 5 and 6 of the inner side 8 of the compressor housing 1 opposite the compressor wheel, which is sufficient for the subsequent plasma spraying.

Rough turning was performed with the following parameters:

| | |
|---|---|
| overmeasure: | 0.4 mm |
| advance: | 0.35 mm |
| cutting speed: | 800 m/min |
| reversible tip: | HM |
| radius: | 0.2 mm |
| achieved coarseness: | 55 ... 80 micron |

The rough turning was effected on one and the same lace as the preceding machining of the blank so that the extra expenditure for rough turning was virtually neglectible.

A production technical intermediate step, such as corundum blasting or the like, would have required a considerably higher expenditure, because the component had to be chucked in a different machine.

After rough turning, the component was transferred to a coating installation. The coating installation used was a burner system F4 of Medicoat.

By rotating the component, a uniform coating of the surface to be coated was achieved.

The coating material AlSi12 + polyester (Sulzer Metco 601 NS) was introduced by means of a powder conveyor and an injector into the plasma created by the burner system, and applied onto the surface to be coated.

The operational parameters were the following ones:

| | |
|---|---|
| Nozzle diameter: | 6 mm |
| working current: | 300 A |
| plasma gases: | Ar 70 l/min |
| | H2 8l/min |
| carrier gas: | 5l/min |
| powder conveying rate: | 30 g/min |
| centre distance: | 100 mm |

The powder's particle size of the basic material for coating and the operational parameter described were optimised in such a manner that the particle size of the coating amounted to about 4 microns and a relative small porosity was created.

The surface of the abrasion coating obtained under the above-mentioned conditions had a quality which necessitated no finishing treatment.

However, a finishing treatment could be performed, which is particularly of advantage for the postponed systems, such as the burner space, the turbine and the catalyst.

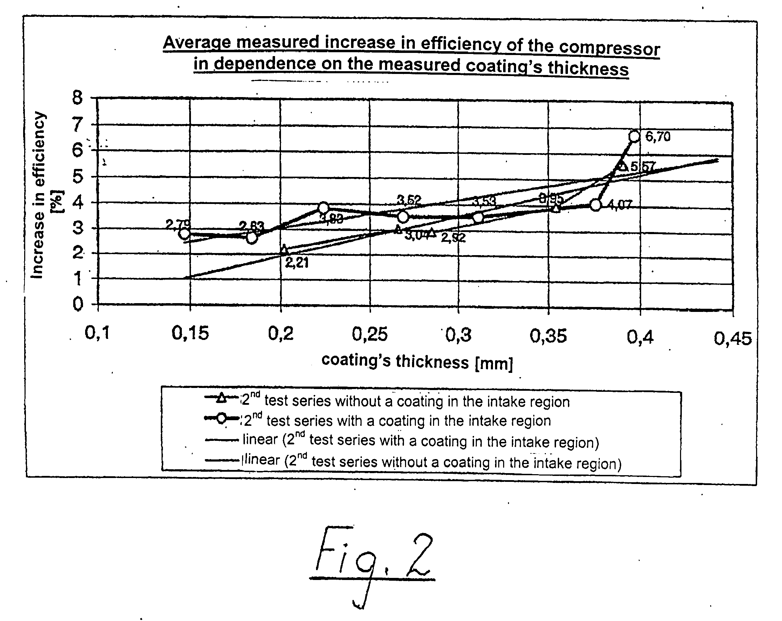

In Fig. 2, the results of several produced coating thicknesses, on the one hand, and of compressor housings having an abrasion coating only in the contour region of the compressor wheel, or with a coating also in the intake area, on the other hand, are represented in the form of the increase of the degree of efficiency of the compressor.

Therefrom, it results that with a compressor having a coating both in the contour region of the compressor wheel and in the intake area of a thickness of about 0.15 mm, the increase in efficiency is in the order of about 2.5%, the increase in efficiency exceeding 5% with a coating of 0.4 mm.

With a compressor having a coating only in the contour region of the compressor wheel, the efficiency rises by about 1% with a coating thickness of 0.15 mm and reaches also about 5% with a coating thickness of 0.4 mm.

This allows the conclusion that the application of a coating in the intake area too supports the increase in efficiency of the compressor in the case of a relative thin abrasion coating, but has no more substantial effect, if the coating thickness is further increased.

## Claims

1. Process of producing a compressor housing of an exhaust gas turbocharger comprising a rotationally symmetrical wall, the inner side of which is provided with an abrasion coating, **characterised by** the following steps:
- manufacturing a compressor housing by means of a manufacturing procedure which includes rough turning,
- coating the inner side of the wall of the compressor housing with an abrasion coating without an intermediate activation step of the surface that is independent from the production process, and
- optionally a finishing treatment of the coated surface.

2. Process according to claim 1, **characterised in that** the production of the abrasion coating is effected by means of atmospheric plasma spraying.

3. Process according to claim 1, **characterised in that** the production of the abrasion coating is effected by means of plasma spraying a mixture of aluminium-silicon and polyester.

4. Process according to claim 3, **characterised in that** Sulzer Metco NS 601 is used as a mixture of aluminium-silicon and polyester.

5. Process according to any of the preceding claims, **characterised in that** the coating parameters are chosen in such a manner that the average particle size of the abrasion coating amounts to about 4 microns.

6. Process according to any of the preceding claims, **characterised in that** the coating parameters are chosen in such a manner that the porosity of the abrasion coating is constant throughout the coating's thickness.

7. Compressor housing (1) comprising a rotationally symmetrical inner wall (8) for receiving a compressor wheel (4) which rotates about a central axis (A) within the compressor housing (1), wherein the edge regions (11) thereof, being remote from the central axis (A) in radial direction, move at a relative small distance to the contour (10) of the rotationally symmetrical inner wall (8) along this contour, the inner wall (8) of the compressor housing (1) having an abrasion coating (7) which is swept by the edge regions (11) of the compressor wheel (4), thereby adapting the surface of the abrasion coating (7), particularly during an early operational phase of the compressor (1), to the edge contour (11) of the compressor wheel (4), and wherein the abrasion coating (7) is produced by a powder mixture of aluminium-silicon and polyester, **characterised in that** the compressor housing (1) is produced in accordance with any of claims 1 to 5.

8. Compressor housing according to claim 7, **characterised in that** the abrasion coating (7) comprises a fine grain structure having an average particle size of about 4 microns, as may be, for example, be produced by atmospheric plasma spraying.

9. Compressor housing (1) according to claim 7 or 8, **characterised in that** a region (6) of the inner contour (10) of the compressor housing (1), which together with the compressor wheel forms a rotationally symmetrical gap (9), is provided with an abrasion coating (7).

10. Compressor housing (1) according to any of claims 7 to 9, **characterised in that**, apart from the area (6) of the inner wall (8) of the compressor housing (1) that cooperates with the compressor wheel (4), the intake area (5) of the compressor housing (1) is also provided with an abrasion coating.

11. Compressor housing (1) according to any of claims 7 to 10, **characterised in that** a powder mixture of AlSi12 plus polyester (SulzerMetco NS 601) is used as a basic material for producing the abrasion coating (7).

12. Compressor housing (1) according to any of claims 7 to 11, **characterised in that** the porosity of the coating (7) is constant throughout the coating's thickness.

13. The use of a compressor housing (1) according to any of claims 7 to 12 as a housing of a turbocharger compressor.
